# EUROPEAN PATENT APPLICATION

(11) **EP 3 687 112 A1**
(43) Date of publication of application: **29.07.2020**
(21) Application number: 18877436.8
(22) Date of filing: 24.10.2018
(51) Int. Cl.: H04L 12/24

(54) **COMMUNICATION METHOD AND COMMUNICATION DEVICE**

(30) Priority: 17.11.2017 CN 201711148055
(71) Applicant: Huawei Technologies Co., Ltd., Longgang District Shenzhen, Guangdong 518129 (CN)
(72) Inventor: YANG, Shuigen, Shenzhen, Guangdong 518129 (CN); LU, Wei, Shenzhen, Guangdong 518129 (CN); SUN, Wenqi, Shenzhen, Guangdong 518129 (CN); TAN, Wei, Shenzhen, Guangdong 518129 (CN); FENG, Zhenni, Shenzhen, Guangdong 518129 (CN); JIANG, Ruobing, Shenzhen, Guangdong 518129 (CN)
(74) Representative: Pfenning, Meinig & Partner mbB
(86) International application number: PCT/CN2018/111712
(87) International publication number: WO 2019/095951

(57) **Abstract**

This application provides a method and an apparatus for managing a network slice subnet instance. The method includes: sending, by a first device, a request message to a second device, where the request message is used to request to associate at least one first network slice subnet template with at least one first network slice subnet instance, and the request message includes an identifier of the at least one first network slice subnet instance and an identifier of the at least one first network slice subnet template. This can reduce transmission resource overheads caused by updating a network slice instance or the network slice subnet instance, and reduce a processing latency of updating the network slice instance or the network slice subnet instance, thereby improving user experience.

## Description

This application claims priority to Chinese Patent Application No. 201711148055.7, filed with the Chinese Patent Office on November 17, 2017 and entitled "COMMUNICATION METHOD AND COMMUNICATIONS APPARATUS", which is incorporated herein by reference in its entirety.

### TECHNICAL FIELD

Embodiments of this application relate to the communications field, and more specifically, to a communication method and a communications apparatus.

### BACKGROUND

Currently, in an existing network slice technology, a single physical network provided by a first-tier operator may be divided into a plurality of virtual networks (namely, network slices), and different network slices may be provided for different second-tier operators to provide different services, so that a plurality of services can be provided by using the single physical network.

As factors such as a requirement of a second-tier operator and a physical network change continuously, there may be a case in which a previously configured network slice cannot meet a current requirement.

Therefore, a technology that can update the network slice emerges. In this technology, when the network slice needs to be updated, a higher-layer device may generate, based on a requirement of an operator or the second-tier operator, data required for updating the network slice, and may send the data to a management device responsible for managing the network slice, so that the management device updates the network slice.

However, in the prior art, there is a relatively large quantity of data, transmission of the data between the higher-layer device and the management device needs to occupy a large quantity of resources, and the large quantity of data causes a relatively long transmission latency, resulting in a latency of an update process and seriously affecting user experience.

### SUMMARY

This application provides a communication method and a communications apparatus, to reduce transmission resource overheads caused by updating a network slice instance or a network slice subnet instance, and reduce a processing latency of updating the network slice instance or the network slice subnet instance, thereby improving user experience.

According to a first aspect, a communication method is provided, including: sending, by a first device, a request message to a second device, where the request message is used to request to associate at least one first network slice subnet template with at least one first network slice subnet instance, and the request message includes an identifier of the at least one first network slice subnet instance and an identifier of the at least one first network slice subnet template.

"Associating the at least one first network slice subnet template with the at least one first network slice subnet instance" may mean that the at least one first network slice subnet instance needs to be created or updated based on the at least one first network slice subnet template.

In other words, after the at least one first network slice subnet template is associated with the at least one first network slice subnet instance, the at least one first network slice subnet template may be used to update or create the at least one first network slice subnet instance.

Optionally, the first network slice subnet template is used to indicate at least one of a structure, a configuration, and a network capability of a network slice subnet.

Optionally, the method further includes: obtaining, by the first device, mapping relationship information, where the mapping relationship information is used to indicate a one-to-one mapping relationship between a plurality of identifiers including the identifier of the first network slice subnet instance and a plurality of templates including the first network slice subnet template; and determining, by the first device based on the mapping relationship information, that an identifier corresponding to the at least one first network slice subnet template is the identifier of the at least one first network slice subnet template.

According to the communication method in this application, a plurality of templates are preconfigured on the first device and the second device, and an identifier is configured for each template. The first device and the second device configure a same identifier for a same template. Therefore, when the first device determines that a template needs to be associated with a network slice subnet instance, the first device may add an identifier of the template and an identifier of the network slice subnet instance to the request message, so that the second device can determine, based on the identifiers carried in the request message, the template with which the network slice subnet instance needs to be associated, and specific data of the template does not need to be sent to the second device when updating is indicated. This can reduce transmission resource overheads caused by updating the network slice subnet instance, and reduce a processing latency of updating the network slice subnet instance, thereby improving user experience.

Optionally, the method further includes: receiving, by the first device, a response message from the second device, where the response message includes a first parameter, and the first parameter is used to provide an identifier of a lifecycle action event of the at least one first network slice subnet instance.

The lifecycle action event of the at least one first network slice subnet instance includes that the at least one first network slice subnet template is associated with the at least one first network slice subnet instance.

In other words, the response message is used to indicate that the second device associates the at least one first network slice subnet template with the at least one first network slice subnet instance.

The second device feeds back the response message to the first device, so that the first device can learn of a status of the network slice subnet instance, thereby facilitating management of the network slice subnet instance.

Optionally, the response message further includes a second parameter, and the second parameter is used to indicate whether the at least one first network slice subnet template is successfully associated with the at least one first network slice subnet instance.

Optionally, the first request message further includes a third parameter, and the third parameter is used to indicate that an action for the at least one first network slice subnet instance is to associate the at least one first network slice subnet template with the at least one first network slice subnet instance.

The third parameter may also be referred to as an update type parameter or update type information.

Optionally, the request message further includes a fourth parameter, and the fourth parameter is used to indicate whether the at least one first network slice subnet instance is automatically synchronized by the second device to the at least one network slice subnet template.

In other words, the fourth parameter is used to indicate whether association between the at least one first network slice subnet template and the at least one first network slice subnet instance is autonomously performed by the second device.

The fourth parameter may also be referred to as a synchronization parameter or synchronization information.

Optionally, the first device is a communication service management function CSMF device, a network slice management function NSMF device, a network slice subnet management function NSSMF device, a network manager (network manager), a domain manager (domain manager), an element manager (element manager), a network function virtualization orchestration (network function virtualization orchestration), a virtualized network function manager (virtualized network function manager), a virtualized infrastructure manager (virtualized infrastructure manager), or any combination of the foregoing devices. The second device is a network slice subnet management function NSSMF device.

The CSMF device may be a device or an entity that has a communication service management function, the NSMF device may be a device or an entity that has a network slice management function, and the NSSMF device may be a device or an entity that has a network slice subnet management function.

According to a second aspect, a communication method is provided, including: receiving, by a second device, a request message from the first device, where the request message is used to request to associate at least one first network slice subnet template with at least one first network slice subnet instance, and the request message includes an identifier of the at least one first network slice subnet instance and an identifier of the at least one first network slice subnet template.

"Associating the at least one first network slice subnet template with the at least one first network slice subnet instance" may mean that the at least one first network slice subnet instance needs to be created or updated based on the at least one first network slice subnet template.

In other words, after the at least one first network slice subnet template is associated with the at least one first network slice subnet instance, the at least one first network slice subnet template may be used to update or create the at least one first network slice subnet instance.

Optionally, the first network slice subnet template is used to indicate at least one of a structure, a configuration, and a network capability of a network slice subnet.

Optionally, the method further includes: obtaining, by the second device, mapping relationship information, where the mapping relationship information is used to indicate a one-to-one mapping relationship between a plurality of identifiers including the identifier of the first network slice subnet instance and a plurality of templates including the first network slice subnet template; and determining, by the second device, the at least one first network slice subnet template based on the mapping relationship information and the identifier of the at least one first network slice subnet template.

According to the communication method in this application, a plurality of templates are preconfigured on the first device and the second device, and an identifier is configured for each template. The first device and the second device configure a same identifier for a same template. Therefore, when the first device determines that a template needs to be associated with a network slice subnet instance, the first device may add an identifier of the template and an identifier of the network slice subnet instance to the request message, so that the second device can determine, based on the identifiers carried in the request message, the template with which the network slice subnet instance needs to be associated, and specific data of the template does not need to be sent to the second device when updating is indicated. This can reduce transmission resource overheads caused by updating the network slice subnet instance, and reduce a processing latency of updating the network slice subnet instance, thereby improving user experience.

Optionally, the method further includes: sending, by the second device, a response message to the first device, where the response message includes a first parameter, and the first parameter is used to provide an identifier of a lifecycle action event of the at least one first network slice subnet instance.

The lifecycle action event of the at least one first network slice subnet instance includes that the at least one first network slice subnet template is associated with the at least one first network slice subnet instance.

In other words, the response message is used to indicate that the second device associates the at least one first network slice subnet template with the at least one first network slice subnet instance.

The second device feeds back the response message to the first device, so that the first device can learn of a status of the network slice subnet instance, thereby facilitating management of the network slice subnet instance.

Optionally, the response message further includes a second parameter, and the second parameter is used to indicate whether the at least one first network slice subnet template is successfully associated with the at least one first network slice subnet instance.

Optionally, the first request message further includes a third parameter, and the third parameter is used to indicate that an action for the at least one first network slice subnet instance is to associate the at least one first network slice subnet template with the at least one first network slice subnet instance.

The third parameter may also be referred to as an update type parameter or update type information.

Optionally, the request message further includes a fourth parameter, and the fourth parameter is used to indicate whether the at least one first network slice subnet instance is automatically synchronized by the second device to the at least one network slice subnet template.

In other words, the fourth parameter is used to indicate whether association between the at least one first network slice subnet template and the at least one first network slice subnet instance is autonomously performed by the second device.

The fourth parameter may also be referred to as a synchronization parameter or synchronization information.

Optionally, the first device is a communication service management function CSMF device, a network slice management function NSMF device, a network slice subnet management function NSSMF device, a network manager (network manager), a domain manager (domain manager), an element manager (element manager), a network function virtualization orchestration (network function virtualization orchestration), a virtualized network function manager (virtualized network function manager), a virtualized infrastructure manager (virtualized infrastructure manager), or any combination of the foregoing devices. The second device is a network slice subnet management function NSSMF device.

The CSMF device may be a device or an entity that has a communication service management function, the NSMF device may be a device or an entity that has a network slice management function, and the NSSMF device may be a device or an entity that has a network slice subnet management function.

According to a third aspect, a communication method is provided, including: sending, by a first device, a request message to a second device, where the request message is used to request to associate at least one first network slice template with at least one first network slice instance, and the request message includes an identifier of the at least one first network slice instance and an identifier of the at least one first network slice template.

"Associating the at least one first network slice template with the at least one first network slice instance" may mean that the at least one first network slice instance needs to be created or updated based on the at least one first network slice template.

In other words, after the at least one first network slice template is associated with the at least one first network slice instance, the at least one first network slice template may be used to update or create the at least one first network slice instance.

Optionally, the first network slice template is used to indicate at least one of a structure, a configuration, and a network capability of a network slice.

Optionally, the method further includes: obtaining, by the first device, mapping relationship information, where the mapping relationship information is used to indicate a one-to-one mapping relationship between a plurality of identifiers including the identifier of the first network slice instance and a plurality of templates including the first network slice template; and determining, by the first device based on the mapping relationship information, that an identifier corresponding to the at least one first network slice template is the identifier of the at least one first network slice template.

According to the communication method in this application, a plurality of templates are preconfigured on the first device and the second device, and an identifier is configured for each template. The first device and the second device configure a same identifier for a same template. Therefore, when the first device determines that a template needs to be associated with a network slice instance, the first device may add an identifier of the template and an identifier of the network slice instance to the request message, so that the second device can determine, based on the identifiers carried in the request message, the template with which the network slice instance needs to be associated, and specific data of the template does not need to be sent to the second device when updating is indicated. This can reduce transmission resource overheads caused by updating the network slice instance, and reduce a processing latency of updating the network slice instance, thereby improving user experience.

Optionally, the method further includes: receiving, by the first device, a response message from the second device, where the response message includes a first parameter, and the first parameter is used to provide an identifier of a lifecycle action event of the at least one first network slice instance.

The lifecycle action event of the at least one first network slice instance includes that the at least one first network slice template is associated with the at least one first network slice instance.

In other words, the response message is used to indicate that the second device associates the at least one first network slice template with the at least one first network slice instance.

The second device feeds back the response message to the first device, so that the first device can learn of a status of the network slice instance, thereby facilitating management of the network slice instance.

Optionally, the response message further includes a second parameter, and the second parameter is used to indicate whether the at least one first network slice template is successfully associated with the at least one first network slice instance.

Optionally, the first request message further includes a third parameter, and the third parameter is used to indicate that an action for the at least one first network slice instance is to associate the at least one first network slice template with the at least one first network slice instance.

The third parameter may also be referred to as an update type parameter or update type information.

Optionally, the request message further includes a fourth parameter, and the fourth parameter is used to indicate whether the at least one first network slice instance is automatically synchronized by the second device to the at least one network slice template.

In other words, the fourth parameter is used to indicate whether association between the at least one first network slice template and the at least one first network slice instance is autonomously performed by the second device.

The fourth parameter may also be referred to as a synchronization parameter or synchronization information.

Optionally, the first device is a communication service management function CSMF device, a network manager (network manager), or any combination of the foregoing devices. The second device is a network slice management function NSMF device.

The CSMF device may be a device or an entity that has a communication service management function, and the NSMF device may be a device or an entity that has a network slice management function.

According to a fourth aspect, a communication method is provided, including: receiving, by a second device, a request message from the first device, where the request message is used to request to associate at least one first network slice template with at least one first network slice instance, and the request message includes an identifier of the at least one first network slice instance and an identifier of the at least one first network slice template.

"Associating the at least one first network slice template with the at least one first network slice instance" may mean that the at least one first network slice instance needs to be created or updated based on the at least one first network slice template.

In other words, after the at least one first network slice template is associated with the at least one first network slice instance, the at least one first network slice template may be used to update or create the at least one first network slice instance.

Optionally, the first network slice template is used to indicate at least one of a structure, a configuration, and a network capability of a network slice.

Optionally, the method further includes: obtaining, by the second device, mapping relationship information, where the mapping relationship information is used to indicate a one-to-one mapping relationship between a plurality of identifiers including the identifier of the first network slice instance and a plurality of templates including the first network slice template; and determining, by the second device, the at least one first network slice template based on the mapping relationship information and the identifier of the at least one first network slice template.

According to the communication method in this application, a plurality of templates are preconfigured on the first device and the second device, and an identifier is configured for each template. The first device and the second device configure a same identifier for a same template. Therefore, when the first device determines that a template needs to be associated with a network slice instance, the first device may add an identifier of the template and an identifier of the network slice instance to the request message, so that the second device can determine, based on the identifiers carried in the request message, the template with which the network slice instance needs to be associated, and specific data of the template does not need to be sent to the second device when updating is indicated. This can reduce transmission resource overheads caused by updating the network slice instance, and reduce a processing latency of updating the network slice instance, thereby improving user experience.

Optionally, the method further includes: sending, by the second device, a response message to the first device, where the response message includes a first parameter, and the first parameter is used to provide an identifier of a lifecycle action event of the at least one first network slice instance.

The lifecycle action event of the at least one first network slice instance includes that the at least one first network slice template is associated with the at least one first network slice instance.

In other words, the response message is used to indicate that the second device associates the at least one first network slice template with the at least one first network slice instance.

The second device feeds back the response message to the first device, so that the first device can learn of a status of the network slice instance, thereby facilitating management of the network slice instance.

Optionally, the response message further includes a second parameter, and the second parameter is used to indicate whether the at least one first network slice template is successfully associated with the at least one first network slice instance.

Optionally, the first request message further includes a third parameter, and the third parameter is used to indicate that an action for the at least one first network slice instance is to associate the at least one first network slice template with the at least one first network slice instance.

The third parameter may also be referred to as an update type parameter or update type information.

Optionally, the request message further includes a fourth parameter, and the fourth parameter is used to indicate whether the at least one first network slice instance is automatically synchronized by the second device to the at least one network slice template.

In other words, the fourth parameter is used to indicate whether association between the at least one first network slice template and the at least one first network slice instance is autonomously performed by the second device.

The fourth parameter may also be referred to as a synchronization parameter or synchronization information.

Optionally, the first device is a communication service management function CSMF device, a network manager (network manager), or any combination of the foregoing devices. The second device is a network slice management function NSMF device.

The CSMF device may be a device or an entity that has a communication service management function, and the NSMF device may be a device or an entity that has a network slice management function.

According to a fifth aspect, a communication method is provided, including: obtaining, by a first device, mapping relationship information, where the mapping relationship information is used to indicate a one-to-one mapping relationship between a plurality of identifiers and a plurality of network slice subnet templates, and the network slice subnet template is used to indicate at least one of a structure, a configuration, and a network capability of a network slice subnet; when a first network slice subnet instance needs to be updated, determining, by the first device, a first network slice subnet template used to update the first network slice subnet instance; determining, by the first device based on the mapping relationship information, a first identifier corresponding to the first network slice subnet template; and sending, by the first device, a request message to the second device, where the request message is used to request to update the first network slice subnet instance, or the request message is used to request to change a network slice subnet template associated with the first network slice subnet instance, or the request message is used to request to associate the first network slice subnet instance with the first network slice subnet template, and the request message carries an identifier of the first network slice subnet instance and the first identifier.

According to a sixth aspect, a communication method is provided, including: obtaining, by a second device, mapping relationship information, where the mapping relationship information is used to indicate a one-to-one mapping relationship between a plurality of identifiers and a plurality of network slice subnet templates, and the network slice subnet template is used to indicate at least one of a structure, a configuration, and a network capability of a network slice subnet; receiving, by the second device, a request message sent by a first device, where the request message is used to request to update the first network slice subnet instance, or the request message is used to request to change a network slice subnet template associated with the first network slice subnet instance, or the request message is used to request to associate the first network slice subnet instance with the first network slice subnet template, and the request message carries an identifier of the first network slice subnet instance and a first identifier; determining, by the second device based on the mapping relationship, a first network slice subnet template corresponding to the first identifier; and associating, by the second device, the first network slice subnet template with the first network slice subnet instance.

According to a seventh aspect, a communication method is provided, including: obtaining, by a first device, mapping relationship information, where the mapping relationship information is used to indicate a one-to-one mapping relationship between a plurality of identifiers and a plurality of network slice templates, and the network slice template is used to indicate at least one of a structure, a configuration, and a network capability of a network slice; when a first network slice instance needs to be updated, determining, by the first device, a first network slice template used to update the first network slice instance; determining, by the first device based on the mapping relationship information, a first identifier corresponding to the first network slice template; and sending, by the first device, a request message to the second device, where the request message is used to request to update the first network slice instance, or the request message is used to request to change a network slice template associated with the first network slice instance, or the request message is used to request to associate the first network slice instance with the first network slice template, and the request message carries an identifier of the first network slice instance and the first identifier.

According to an eighth aspect, a communication method is provided, including: obtaining, by a second device, mapping relationship information, where the mapping relationship information is used to indicate a one-to-one mapping relationship between a plurality of identifiers and a plurality of network slice templates, and the network slice template is used to indicate at least one of a structure, a configuration, and a network capability of a network slice; receiving, by the second device, a request message sent by a first device, where the request message is used to request to update the first network slice instance, or the request message is used to request to change a network slice template associated with the first network slice instance, or the request message is used to request to associate the first network slice instance with the first network slice template, and the request message carries an identifier of the first network slice instance and a first identifier; determining, by the second device based on the mapping relationship, a first network slice subnet template corresponding to the first identifier; and associating, by the second device, the first network slice subnet template with the first network slice subnet instance.

According to a ninth aspect, a communications apparatus is provided, including units configured to perform the steps in any one of the first aspect to the eighth aspect and the implementations of the first aspect to the eighth aspect.

According to a tenth aspect, a communications device is provided, including a processor, configured to invoke a computer program from a memory and run the computer program, so that the communications device performs the method in any one of the first aspect to the eighth aspect and the implementations of the first aspect to the eighth aspect.

According to an eleventh aspect, a chip system is provided, including a processor, configured to invoke a computer program from a memory and run the computer program, so that a device on which the chip system is installed performs the method in any one of the first aspect to the eighth aspect and the implementations of the first aspect to the eighth aspect.

According to a twelfth aspect, a computer program product is provided. The computer program product includes computer program code. When the computer program code is run by a communications unit, a processing unit, a transceiver, or a processor of a network management device (for example, the first device or the second device), the network management device is enabled to perform the method in any one of the first aspect to the eighth aspect and the implementations of the first aspect to the eighth aspect.

According to a thirteenth aspect, a computer readable storage medium is provided. The computer-readable storage medium stores a program, and the program enables a network management device (for example, the first device or the second device) to perform the method in any one of the first aspect to the eighth aspect and the implementations of the first aspect to the eighth aspect.

According to the communication method in this application, the plurality of templates are preconfigured on the first device and the second device, and the identifier is configured for each template. The first device and the second device configure the same identifier for the same template. Therefore, when the first device determines that the template needs to be associated with the network slice instance or the network slice subnet instance, the first device may add the identifier of the template and the identifier of the network slice instance or the network slice subnet instance to the request message, so that the second device can determine, based on the identifiers carried in the request message, the template with which the network slice instance or the network slice subnet instance needs to be associated, and the specific data of the template does not need to be sent to the second device when updating is indicated. This can reduce the transmission resource overheads caused by updating the network slice instance or the network slice subnet instance, and reduce the processing latency of updating the network slice instance or the network slice subnet instance, thereby improving user experience.

### BRIEF DESCRIPTION OF DRAWINGS

FIG. 1 is a schematic structural diagram of an example of a communications system according to this application;
FIG. 2 is a schematic interaction diagram of an example of a communication method according to this application;
FIG. 3 is a schematic interaction diagram of an example of a communication method according to this application;
FIG. 4 is a schematic block diagram of an example of a communications apparatus according to this application;
FIG. 5 is a schematic block diagram of another example of a communications apparatus according to this application;
FIG. 6 is a schematic block diagram of an example of a communications device according to an embodiment of this application; and
FIG. 7 is a schematic block diagram of another example of a communications device according to an embodiment of this application.

### DESCRIPTION OF EMBODIMENTS

A method and an apparatus for managing a network slice subnet instance and a method and an apparatus for managing a network slice instance provided in the embodiments of this application may be applied to a computer. The computer includes a hardware layer, an operating system layer running above the hardware layer, and an application layer running above the operating system layer. The hardware layer includes hardware such as a central processing unit (CPU, Central Processing Unit), a memory management unit (MMU, Memory Management Unit), and a memory (also referred to as a main memory). The operating system may be any one or more computer operating systems that implement service processing by using a process (Process), for example, a Linux operating system, a Unix operating system, an Android operating system, an iOS operating system, or a Windows operating system. The application layer includes applications such as a browser, an address book, word processing software, and instant messaging software. In addition, in the embodiments of this application, the computer may be a handheld device such as a smartphone, or may be a terminal device such as a personal computer. This is not particularly limited in the embodiments of this application, provided that a program that records code of a network slice control method in the embodiments of this application can be run, a network slice is controlled according to the network slice control method in the embodiments of this application. An execution body for controlling the network slice in the embodiments of this application may be a computer device, or a function module that can invoke a program and execute the program in a computer device.

In addition, aspects or features in the embodiments of this application may be implemented as a method, an apparatus or a product that uses standard programming and/or engineering technologies. The term "product" used in this application covers a computer program that can be accessed from any computer readable component, carrier or medium. For example, a computer-readable medium may include but is not limited to a magnetic storage device (for example, a hard disk, a floppy disk, or a magnetic tape), an optical disc (for example, a compact disc (CD, Compact Disc), or a digital versatile disc (DVD, Digital Versatile Disc)), a smart card and a flash memory device (for example, an erasable programmable read-only memory (EPROM, Erasable Programmable Read-Only Memory), a card, a stick, or a key drive). In addition, various storage media described in this specification may indicate one or more devices and/or other machine-readable media that are configured to store information. The term "machine-readable media" may include but is not limited to a radio channel, and various other media that can store, contain, and/or carry an instruction and/or data.

The method and the apparatus provided in this application can be applied to a system in which a service is provided by using the network slice.

Specifically, with rapid development of mobile communications, digital transformation involves almost all conventional industries. However, a conventional cellular network architecture can provide only unified network services, and cannot meet communication requirements with great differences brought by a digital transformation wave, including function and performance differences. In a 5th generation (fifth-generation, 5G) wireless communications system, a network is abstracted as a "network slice". A network slice meets a connection communications service requirement of a type or a use case, and an entire 5G network includes a large quantity of network slices that meet different connection capabilities. One of basic capabilities of the 5G network is that a unified network platform uses dynamic and secure network slices to support connection communications services of different functions and quality of service (quality of service, QoS) levels.

In the embodiments of this application, a network slice (Network slice) may be different logical networks customized based on different service requirements. For example, the network slice may be a complete network including a terminal, an access network, a transport network, a core network, and an application server, can provide a complete telecommunications service, and has a specific network capability. Alternatively, the network slice may be a combination of one or more of the terminal, the access network, the transport network, the core network, and the application server.

In the embodiments of this application, a network slice may be referred to as a network slice instance (Network slice instance, NSI), and the NSI may be instantiation of the network slice, in other words, the NSI may be considered as a real running logical network, and can meet a specific network feature or service requirement.

In the embodiments of this application, one network slice instance may provide one or more services. The network slice instance may be created by a network slice management system. One network slice management system may create a plurality of network slice instances and manage the plurality of network slice instances, for example, modify or terminate the plurality of network slice instances. When the plurality of network slice instances coexist, the network slice instances may share some network resources and network functions. A complete network slice instance can provide a complete end-to-end network service.

Optionally, in the embodiments of this application, one network slice instance may include at least one network slice subnet instance (network slice subnet instance, NSSI). Specifically, the network slice subnet instance may not need to provide a complete end-to-end network service, and the network slice subnet instance may be a set of network functions of a same equipment vendor in the network slice instance, or may be a set of network functions obtained through division by domain, for example, a core-network network slice subnet instance, an access-network network slice subnet instance, or a set formed based on a deployment location and in another manner. The network slice subnet instance may be shared by a plurality of network slice instances. The network slice subnet instance can be configured to facilitate network slice management.

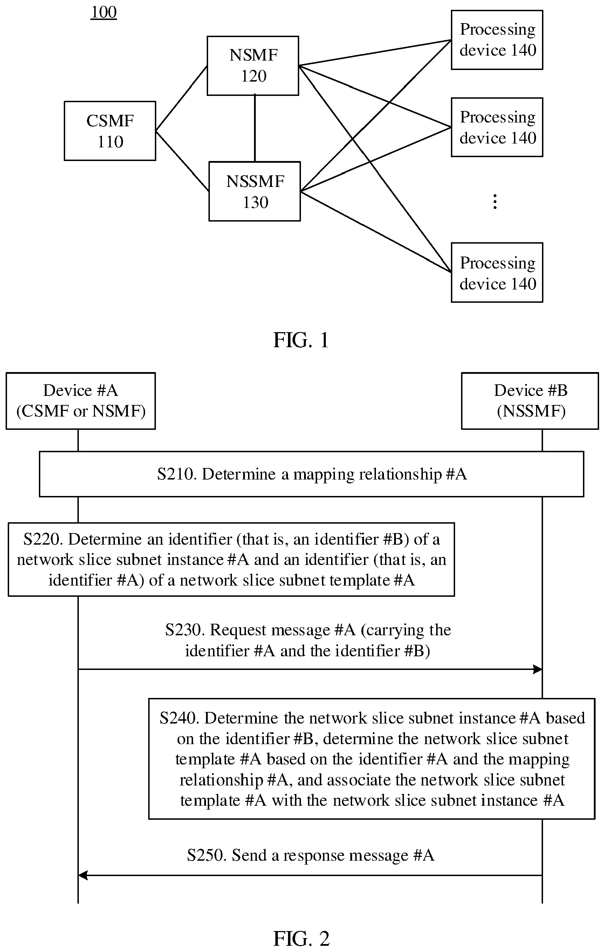

For example, the following describes, with reference to FIG. 1, an architecture of a communications system 100 provided in this application.

As shown in FIG. 1, the system 100 includes:
a communication service management function (Communication Service Management Function, CSMF) 110;
at least one network slice management function (Network Slice Management Function, NSMF) 120;
at least one network slice subnet management function (Network Slice Subnet Management Function, NSSMF) 130; and
at least one processing device 140.

The following separately describes functions of the devices in detail.

### 1. CSMF 110

In this embodiment of this application, the CSMF 110 is in communication connection with the NSMF 120. The CSMF 110 may convert a communications-service-related requirement of an operator and/or a third-party customer into a network-slice-related requirement, and send, to the NSMF through an interface between the CSMF and the NSMF, the requirement of the network slice (for example, a request for creating, terminating, or modifying a network slice instance), obtain management data (for example, performance data and fault data) of the network slice from the NSMF, generate management data of a communication service running on the network slice instance, and receive a subscription requirement of the operator and/or the third-party customer for the management data of the network slice and/or the management data of the communication service, and the like.

Optionally, the CSMF 110 may be further in communication connection with the NSSMF 130. In addition, the CSMF may further convert a communications-service-related requirement of an operator and/or a third-party customer into a network slice subnet-related requirement, and send, to the NSSMF through an interface between the CSMF and the NSSMF, the requirement of the network slice subnet (for example, a request for creating, terminating, or modifying a network slice instance), obtain management data (such as performance data and fault data) of the network slice subnet from the NSSMF, generate management data of a communications service running on the network slice subnet instance, and receive a subscription requirement of the operator and/or the third-party customer for the management data of the network slice subnet and/or the management data of the communications service, and the like.

### 2. NSMF 120

In this embodiment of this application, the NSMF is mainly responsible for receiving a network-slice-related requirement sent by the CSMF, managing a lifecycle, performance, a fault, and the like of a network slice instance, and orchestrating composition of the network slice instance.

Specifically, in this embodiment of this application, the NSMF 120 may be in communication connection with each of the at least one processing device 140, in other words, the NSMF 120 can perform message, information, or data transmission with each processing device 140. Therefore, the processing device 140 carrying the network slice instance is controlled and managed, to control and manage the network slice instance.

For example, the NSMF 120 can communicate with each processing device 140 through a control channel.

By way of example, and not limitation, the control channel may be a channel that is based on a control channel protocol. The control channel protocol may be the OpenFlow (OpenFlow) protocol, the path computation element communication protocol (Path Computation Element Communication Protocol, PCEP), the border gateway protocol (Border Gateway Protocol, BGP), the interface to the routing system (Interface to the Routing System, I2RS) protocol, or the like.

In this embodiment of this application, the NSMF 120 may be a first-level controller provided by a first-tier operator, for example, a virtual control platform. The NSMF 120 may obtain control information for each network slice, and deliver the control information to the processing device 140, so that the processing device 140 can manage and control the network slice based on the obtained control information.

In this embodiment of this application, the NSMF 120 may be configured to: collect a physical network resource and a physical network topology, receive a network slice operation request, and perform global resource allocation calculation.

Optionally, the NSMF 120 may be in communication connection with the NSSMF 130. In addition, the NSMF 120 may further divide a requirement of the network slice instance into requirements of network slice subnet instances and/or network functions, and send a network slice subnet instance management request to each NSSMF 130.

In this embodiment of this application, the NSMF 120 may control and manage the network slice instance based on a network slice template (network slice template, NST).

The NST may be used to describe a structure (including composition elements and connections between the composition elements), a configuration, a network capability, and the like of the network slice. The network slice template may also be referred to as a network slice descriptor (network slice descriptor, NSD). The network slice instance is created based on the network slice template.

The foregoing enumerated functions of the network slice template and the described specific content are merely examples for description. This application is not limited thereto. Other information that can be used to create and manage a network slice or a network slice instance falls within the protection scope of this application.

### 3. NSSMF 130

In this embodiment of this application, the NSSMF is mainly responsible for receiving a network slice subnet requirement sent by the NSMF, the CSMF, or another NSSMF, managing a network slice subnet instance, and orchestrating composition of the network slice subnet instance.

Specifically, in this embodiment of this application, the NSSMF 130 may be in communication connection with the processing device 140 carrying a controlled network slice subnet instance, in other words, the NSSMF 130 can perform message, information, or data transmission with the processing device 140 carrying the controlled network slice subnet instance. Therefore, the processing device 140 carrying the controlled network slice subnet instance is controlled and managed, to control and manage the network slice subnet instance.

For example, the NSSMF 130 can communicate with the processing device 140 through a control channel.

By way of example, and not limitation, the control channel may be a channel that is based on a control channel protocol. The control channel protocol may be the OpenFlow protocol, PCEP, BGP, the I2RS protocol, or the like.

In this embodiment of this application, the NSSMF 130 may be a first-level controller provided by a first-tier operator, for example, a virtual control platform. The NSSMF 130 may obtain control information for each network slice subnet, and deliver the control information to the processing device 140, so that the processing device 140 can manage and control the network slice subnet based on the obtained control information.

In this embodiment of this application, the NSSMF 130 may control and manage the network slice subnet instance based on a network slice subnet template (network slice subnet template, NSST).

The NSST may be used to describe a structure (including composition elements and connections between the composition elements), a configuration, a network capability, and the like of the network slice subnet. The network slice subnet template may also be referred to as a network slice subnet descriptor (network slice subnet descriptor, NSSD). The network slice subnet instance is created based on the network slice template.

The foregoing enumerated functions of the network slice subnet template and the described specific content are merely examples for description. This application is not limited thereto. Other information that can be used to create and manage a network slice subnet or a network slice subnet instance falls within the protection scope of this application.

### 4. Processing device 140

One network slice instance is carried on (one or more) processing devices 140.

In other words, (one or more) virtual machines for (one or more) network slice instances run on one processing device 140.

In addition, in this embodiment of this application, each network slice instance may be carried in some or all of the at least one processing device 140. In addition, processing devices carrying any two network slice instances may be completely the same, or may be partially the same, or may be completely different. This is not particularly limited in this application.

In addition, in this embodiment of this application, a same processing device may carry a plurality of network slice instances. In other words, in this embodiment of this application, a virtual machine of each of the plurality of network slice instances may run on the same processing device.

Optionally, one network slice subnet instance is carried on (one or more) processing devices 140.

In other words, (one or more) virtual machines for (one or more) network slice subnet instances run on one processing device 140.

In addition, in this embodiment of this application, each network slice subnet instance may be carried in some or all of the at least one processing device 140. In addition, processing devices carrying any two network slice subnet instances may be completely the same, or may be partially the same, or may be completely different. This is not particularly limited in this application.

In addition, in this embodiment of this application, a same processing device may carry a plurality of network slice subnet instances. In other words, in this embodiment of this application, a virtual machine of each of the plurality of network slice subnet instances may run on the same processing device.

By way of example, and not limitation, the processing device 140 may be a computing device, a routing device, a forwarding device, or the like.

It should be noted that, in this embodiment of this application, each device or entity in the system 100 shown in FIG. 1 may be a physical device or a virtual device. For example, the virtual device may be a virtual machine (Virtual Machine) that is in a computer system and that provides device functions. This is not specifically limited in this embodiment of this application.

In addition, in this embodiment of this application, a device fragment management program may run on the processing device 140, and is responsible for managing a fragment resource of the device and reporting a device resource status, receiving and processing a service fragment control instruction, generating a device fragment event and reporting the device fragment event, monitoring the device and a link fault, and performing fault recovery.

It should be understood that devices included in the system 100 shown in FIG. 1 are merely examples for description. This application is not limited thereto. For example, in this embodiment of this application, the system 100 may further include one or more of the following devices:
a network manager (network manager), a domain manager (domain manager), an element manager (element manager), a network function virtualization orchestration (network function virtualization orchestration), a virtualized network function manager (virtualized network function manager), a virtualized infrastructure manager (virtualized infrastructure manager), or one or more second-level controllers.

A structure and a function of each of the foregoing devices may be similar to those in the prior art. For example, the second-level controller may be a device provided by the first-tier operator, and a virtual controller that is provided for one or more second-tier operators to manage (or control) a network slice may be generated and run in the second-level controller by using, for example, a virtualization technology, so that the second-tier operator can generate, by using the second-level controller, control information for a network slice that is provided by the first-tier operator to the second-tier operator.

In this case, the NSSMF 130 may be in communication connection with each second-level controller, so that the NSSMF 130 may obtain, from the second-level controller, control information or management information for each network slice.

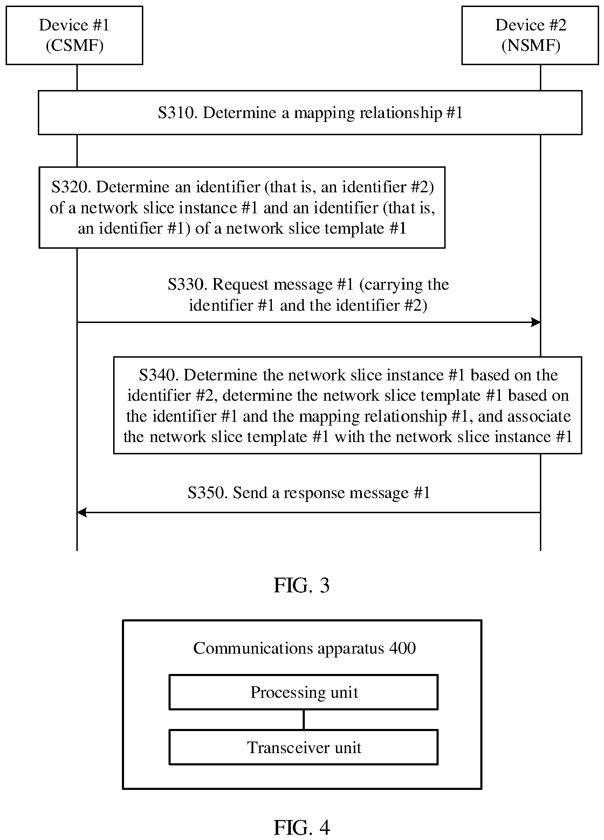

The following describes in detail a communication method provided in this application with reference to FIG. 2 and FIG. 3.

FIG. 2 shows a schematic interaction diagram of a communication method 200 according to this application.

A plurality of NSSMF entities may be configured in a system applicable to the method 200. Each NSSMF entity is configured to control or manage one or more network slice subnet instances. For example, each NSSMF entity may update the one or more network slice subnet instances, and in an embodiment of this application, the NSSMF entity may manage the network slice subnet instance based on an indication from a CSMF entity or an NSMF entity.

For ease of understanding and description, for example, the following describes a process in which one CSMF entity or one NSMF entity (that is, an example of a first device, denoted as a device #A) controls one NSSMF entity (that is, an example of a second device, denoted as a device #B) to update one network slice subnet instance (denoted as a network slice subnet instance #A).

As shown in FIG. 2, in S210, the device #A may obtain data of a plurality of templates (specifically, the foregoing network slice subnet template).

By way of example, and not limitation, the data of the plurality of templates may be configured by a network administrator or a network operator on the device #A, or the data of the plurality of templates may be configured by a device manufacturer on the device #A before delivery of the device #A, or the data of the plurality of templates may be sent by a third-party device (that is, a device other than the device #A and the device #B) to the device #A. This is not particularly limited in this application.

Optionally, in this embodiment of this application, the device #A may further send the data of the plurality of templates to the device #B.

In addition, the device #A may obtain a mapping relationship #A. The mapping relationship #A may be used to indicate a one-to-one mapping relationship between a plurality of identifiers and a plurality of templates (specifically, the network slice subnet templates).

By way of example, and not limitation, the mapping relationship #A may be configured by a network administrator or a network operator on the device #A, or the mapping relationship #Amay be configured by a device manufacturer on the device #A before delivery of the device #A, or the mapping relationship #Amay be sent by a third-party device to the device #A. This is not particularly limited in this application.

Alternatively, the plurality of identifiers may be autonomously generated by the device #A based on, for example, a pseudo random number generation manner, and the mapping relationship #A may be autonomously determined by the device #A.

In addition, optionally, in this embodiment of this application, the device #A may further send the mapping relationship #A to the device #B.

Similarly, the device #B may obtain the data of the plurality of templates.

By way of example, and not limitation, the data of the plurality of templates may be configured by a network administrator or a network operator on the device #B, or the data of the plurality of templates may be configured by a device manufacturer on the device #B before delivery of the device #B, or the data of the plurality of templates may be sent by a third-party device (that is, a device other than the device #A and the device #B) to the device #B. This is not particularly limited in this application.

Optionally, in this embodiment of this application, the device #B may further receive the data of the plurality of templates from the device #A.

In addition, the device #B may obtain the mapping relationship #A.

By way of example, and not limitation, the mapping relationship #A may be configured by a network administrator or a network operator on the device #B, or the mapping relationship #Amay be configured by a device manufacturer on the device #B before delivery of the device #B, or the mapping relationship #Amay be sent by a third-party device to the device #B. This is not particularly limited in this application.

Optionally, in this embodiment of this application, the device #B may further receive the mapping relationship #A from the device #A.

It should be understood that the foregoing enumerated methods and processes for determining the plurality of templates and the mapping relationship #A by the device #A and the device #B are merely examples for description. This application is not limited thereto, provided that it can be ensured that mapping relationships determined by the device #A and the device #B between the plurality of identifiers and the plurality of templates are consistent, in other words, provided that the device #A and the device #B can uniquely determine a same template based on a same identifier.

In S220, when the device #A determines that the network slice subnet instance #A needs to be updated (in other words, when the device #A determines that a network slice subnet template associated with the network slice subnet instance #A needs to be changed), the device #A may determine a network slice subnet template (denoted as a network slice subnet template #A below for ease of understanding and description) used to update the network slice subnet instance #A (in other words, a network slice subnet template with which the network slice subnet instance #A needs to be associated).

By way of example, and not limitation, in this embodiment of this application, the device #A may determine, based on a user requirement of a user of the network slice subnet instance #A, that the network slice subnet instance #A needs to be updated, and determine the network slice subnet template #A used when the network slice subnet instance #A is updated.

Alternatively, in this embodiment of this application, the device #A may determine, based on a running status (for example, a load status or a fault status) of a processing device carrying the network slice subnet instance #A, that the network slice subnet instance #A needs to be updated, and determine the network slice subnet template #A used during updating.

It should be understood that the foregoing enumerated manners in which the device #A determines that the network slice subnet instance #A needs to be updated are merely examples for description. This application is not limited thereto. Other manners in which the device #A can determine that the network slice subnet instance #A needs to be updated fall within the protection scope of this application.

In addition, the foregoing enumerated manners in which the device #A determines the network slice subnet template #A are merely examples for description. This application is not limited thereto. Other manners in which the device #A can determine the network slice subnet template #A used when the network slice subnet instance #A is updated fall within the protection scope of this application.

In addition, the device #Amay determine, based on the mapping relationship #A, an identifier corresponding to the network slice subnet template #A, in other words, an identifier of the network slice subnet template #A. For ease of understanding and differentiation, the following denotes the identifier as an identifier #A.

In addition, the device #A may determine an identifier of the network slice subnet instance #A. For ease of understanding and differentiation, the following denotes the identifier as an identifier #B.

In S230, the device #A may send a request message #A to the device #B, where the message #A may carry the identifier #A and the identifier #B.

The request message #A is used to request the device #B to update the network slice subnet instance #A.

Alternatively, the request message #A is used to request the device #B to change the network slice subnet template associated with the network slice subnet instance #A.

Alternatively, the request message #A is used to request the device #B to associate the network slice subnet instance #A with the network slice subnet template #A.

For example, in this embodiment of this application, the request message #A may have a specified format. To be specific, after receiving the request message #A, the device #B determines, based on the specified format, that the network slice subnet instance indicated by the identifier carried in the message needs to be updated.

Alternatively, after receiving the request message #A, the device #B determines, based on the specified format, that the network slice subnet template associated with the network slice subnet instance indicated by the identifier carried in the message needs to be changed.

Alternatively, after receiving the request message #A, the device #B determines, based on the specified format, that the network slice subnet instance and the network slice subnet template that are indicated by the identifiers carried in the message need to be managed.

For another example, in this embodiment of this application, the request message #Amay be added to a specified resource (for example, a time domain resource, a frequency domain resource, a code domain resource, or a space domain resource). To be specific, after receiving the message sent by using the specified resource, the device #B determines, based on the specified resource, that the network slice subnet instance indicated by the identifier carried in the message needs to be updated.

Alternatively, after receiving the request message #A, the device #B determines, based on the specified resource, that the network slice subnet template associated with the network slice subnet instance indicated by the identifier carried in the message needs to be changed.

Alternatively, after receiving the request message #A, the device #B determines, based on the specified resource, that the network slice subnet instance and the network slice subnet template that are indicated by the identifiers carried in the message need to be managed.

For another example, in this embodiment of this application, the request message #A may carry an identifier #C (that is, an example of a third parameter) with a specified value. To be specific, after receiving the message carrying the specified identifier #C, the device #B determines, based on the specified identifier #C, that the network slice subnet instance indicated by the identifier carried in the message needs to be updated.

Alternatively, after receiving the request message #A, the device #B determines, based on the specified identifier #C, that the network slice subnet template associated with the network slice subnet instance indicated by the identifier carried in the message needs to be changed.

Alternatively, after receiving the request message #A, the device #B determines, based on the specified identifier #C, that the network slice subnet instance and the network slice subnet template that are indicated by the identifiers carried in the message need to be managed.

Therefore, after receiving the request message #A, the device #B can determine the network slice subnet instance #A based on the identifier #B, and further determine that the network slice subnet instance #A needs to be updated.

Optionally, the request message #A may further carry information #D (that is, another example of the third parameter), and the information #D may be used to indicate that the network slice subnet instance is updated based on the network slice subnet template.

Specifically, in this embodiment of this application, the network slice subnet instance may be updated based on the network slice subnet template, or the network slice subnet instance may be updated based on information about a user requirement, status information of a processing device, or the like.

Therefore, after determining that the request message #A carries the information #D, the device #B may determine, based on the information #D, that a network slice subnet template needs to be used when the network slice subnet instance is updated.

Further, the device #B may determine, based on the mapping relationship #A, the network slice subnet template corresponding to the identifier #A, in other words, the network slice subnet template #A.

In this way, the device #B can determine the network slice subnet template #A based on the request message #A, and determine that the network slice subnet template #A is used to update the network slice subnet template #A.

Optionally, the request message #A may further carry information #F (that is, an example of a fourth parameter), and the information #F may be used to indicate whether the network slice subnet instance is updated by the device #B autonomously.

Specifically, in this embodiment of this application, updating (specifically, an update moment) performed by the device #B on the network slice subnet instance may be autonomously determined by the device #B.

Alternatively, in this embodiment of this application, updating (specifically, an update moment) performed by the device #B on the network slice subnet instance may be indicated by the device #A.

In addition, by way of example, and not limitation, that the update moment of the network slice subnet instance by the device #B is indicated by the device #A includes the following cases.

For example, the update moment may be indicated by the device #Aby using a message (denoted as a message #B) other than the request message #A. For example, the update moment may be within a specified time range starting from a time at which the device #B receives the message #B. Alternatively, the message #B may carry information used to indicate the update moment.

For another example, the update moment may be indicated by the device #A by using the request message #A. For example, the update moment may be within a specified time range starting from a time at which the device #B receives the request message #A. Alternatively, the request message #A may carry information used to indicate the update moment.

Therefore, the device #B may determine, based on the information #F carried in the request message #A, whether the device #B can autonomously determine the moment for updating the network slice subnet instance #A.

In S240, after receiving the request message #A, the device #B can determine the network slice subnet instance #A based on the identifier #B, and further determine that the network slice subnet instance #A needs to be updated. In addition, the device #B may determine, based on the mapping relationship #A, the network slice subnet template #A corresponding to the identifier #A. Therefore, the device #B can update the network slice subnet instance #A based on the network slice subnet template #A.

A method and a process in which the device #B updates the network slice subnet instance based on the network slice subnet template may be similar to those in the prior art. To avoid repetition, detailed descriptions thereof are omitted herein.

In S250, the device #B may further send a response message #Ato the device #A. The response message #A may be used to indicate that the device #B performs update processing on the network slice subnet instance #A.

The response message #A may carry the identifier #B.

For example, in this embodiment of this application, the response message #A may have a specified format. To be specific, after receiving the response message #A, the device #A determines, based on the specified format, that the network slice subnet instance indicated by the identifier carried in the message is updated.

Alternatively, after receiving the message sent by using the specified resource, the device #A determines, based on the specified format, that the network slice subnet template associated with the network slice subnet instance indicated by the identifier carried in the message changes.

For another example, in this embodiment of this application, the response message #Amay be added to a specified resource (for example, a time domain resource, a frequency domain resource, a code domain resource, or a space domain resource). To be specific, after receiving the message sent by using the specified resource, the device #A determines, based on the specified resource, that the network slice subnet instance indicated by the identifier carried in the message is updated.

Alternatively, after receiving the message sent by using the specified resource, the device #A determines, based on the specified resource, that the network slice subnet template associated with the network slice subnet instance indicated by the identifier carried in the message changes.

For another example, in this embodiment of this application, the response message #Amay carry an identifier #E (that is, an example of a second parameter) with a specified value. To be specific, after receiving the message carrying the specified identifier #E, the device #A determines, based on the specified identifier #E, that the network slice subnet instance indicated by the identifier (that is, the identifier #B) carried in the message is updated.

Alternatively, after receiving the message sent by using the specified resource, the device #A determines, based on the specified identifier #E, that the network slice subnet template associated with the network slice subnet instance indicated by the identifier carried in the message changes.

Therefore, after receiving the response message #A, the device #A can determine, based on the identifier #B, that the network slice subnet instance #A is updated or the network slice subnet template associated with the network slice subnet instance #A is changed.

Optionally, in this embodiment of this application, the response message #A may further carry an identifier #G (that is, an example of the fourth parameter), and the identifier #G may be used to indicate whether updating succeeds.

Optionally, the identifier #G may be used to indicate a time at which updating occurs.

According to the communication method in this application, a plurality of templates are preconfigured on the first device and the second device, and an identifier is configured for each template. The first device and the second device configure a same identifier for a same template. Therefore, when the first device determines that a template needs to be associated with a network slice subnet instance, the first device may add an identifier of the template and an identifier of the network slice subnet instance to the request message, so that the second device can determine, based on the identifiers carried in the request message, the template with which the network slice instance needs to be associated, and specific data of the template does not need to be sent to the second device when updating is indicated. This can reduce transmission resource overheads caused by updating the network slice subnet instance, and reduce a processing latency of updating the network slice subnet instance, thereby improving user experience.

FIG. 3 shows a schematic interaction diagram of a communication method 300 according to this application.

A plurality of NSMF entities may be configured in a system applicable to the method 300. Each NSMF entity is configured to control or manage one or more network slice instances. For example, each NSMF entity may update the one or more network slice instances. In addition, in an embodiment of this application, the NSMF entity may manage the network slice instance based on an indication from a CSMF entity.

For ease of understanding and description, for example, the following describes a process in which one CSMF entity (that is, an example of a first device, denoted as a device #1) to control one NSMF entity (that is, an example of a second device, denoted as a device #2) to update one network slice instance (denoted as a network slice instance #1).

As shown in FIG. 3, in S310, the device #1 may obtain data of a plurality of templates (specifically, the foregoing network slice template).

By way of example, and not limitation, the data of the plurality of templates may be configured by a network administrator or a network operator on the device #1, or the data of the plurality of templates may be configured by a device manufacturer on the device #1 before delivery of the device #1, or the data of the plurality of templates may be sent by a third-party device (that is, a device other than the device #1 and the device #2) to the device #1. This is not particularly limited in this application.

Optionally, in this embodiment of this application, the device #1 may further send the data of the plurality of templates to the device #2.

In addition, the device #1 may obtain a mapping relationship #1. The mapping relationship #1 may be used to indicate a one-to-one mapping relationship between a plurality of identifiers and a plurality of templates (specifically, the network slice templates).

By way of example, and not limitation, the mapping relationship #1 may be configured by a network administrator or a network operator on the device #1, or the mapping relationship #1 may be configured by a device manufacturer on the device #1 before delivery of the device #1, or the mapping relationship #1 may be sent by a third-party device to the device #1. This is not particularly limited in this application.

Alternatively, the plurality of identifiers may be autonomously generated by the device #1 based on, for example, a pseudo random number generation manner, and the mapping relationship #1 may be autonomously determined by the device #1.

In addition, optionally, in this embodiment of this application, the device #1 may further send the mapping relationship #1 to the device #2.

Similarly, the device #2 may obtain the data of the plurality of templates.

By way of example, and not limitation, the data of the plurality of templates may be configured by a network administrator or a network operator on the device #2, or the data of the plurality of templates may be configured by a device manufacturer on the device #2 before delivery of the device #2, or the data of the plurality of templates may be sent by a third-party device (that is, a device other than the device #1 and the device #2) to the device #2. This is not particularly limited in this application.

Optionally, in this embodiment of this application, the device #2 may further receive the data of the plurality of templates from the device #1.

In addition, the device #2 may obtain the mapping relationship #1.

By way of example, and not limitation, the mapping relationship #1 may be configured by a network administrator or a network operator on the device #2, or the mapping relationship #1 may be configured by a device manufacturer on the device #2 before delivery of the device #2, or the mapping relationship #1 may be sent by a third-party device to the device #2. This is not particularly limited in this application.

Optionally, in this embodiment of this application, the device #2 may further receive the mapping relationship #1 from the device #1.

It should be understood that the foregoing enumerated methods and processes of determining the plurality of templates and the mapping relationship #1 by the device #1 and the device #2 are merely examples for description. This application is not limited thereto, provided that it can be ensured that mapping relationships determined by the device #1 and the device #2 between the plurality of identifiers and the plurality of templates are consistent, in other words, provided that the device #1 and the device #2 can uniquely determine a same template based on a same identifier.

S320. When the device #1 determines that the network slice instance #1 needs to be updated (in other words, when the device #1 determines that a network slice subnet template associated with the network slice instance #1 needs to be changed), the device #1 may determine a network slice template (denoted as a network slice template #1 below for ease of understanding and description) used to update the network slice instance #1.

By way of example, and not limitation, in this embodiment of this application, the device #1 may determine, based on a user requirement of a user of the network slice instance #1, that the network slice instance #1 needs to be updated, and determine the network slice template #1 used during updating.

Alternatively, in this embodiment of this application, the device #1 may determine, based on a running status (for example, a load status or a fault status) of a processing device carrying the network slice instance #1, that the network slice instance #1 needs to be updated, and determine the network slice template #1 used during updating.

It should be understood that the foregoing enumerated manners in which the device #1 determines that the network slice instance #1 needs to be updated are merely examples for description. This application is not limited thereto. Other manners in which the device #1 can determine that the network slice instance #1 needs to be updated fall within the protection scope of this application.

In addition, the foregoing enumerated manners in which the device #1 determines the network slice template #1 used to update the network slice instance #1 are merely examples for description. This application is not limited thereto. Other manners in which the device #1 can determine the network slice template #1 used to update the network slice instance #1 fall within the protection scope of this application.

In addition, the device #1 may determine, based on the mapping relationship #1, an identifier corresponding to the network slice template #1, in other words, an identifier of the network slice template #1. For ease of understanding and differentiation, the following denotes the identifier as an identifier #1.

In addition, the device #1 may determine an identifier of the network slice instance #1. For ease of understanding and differentiation, the following denotes the identifier as an identifier #2.

In S330, the device #1 may send a request message #1 to the device #2, where the message #1 may carry the identifier #1 and the identifier #2.

The request message #1 is used to request the device #2 to update the network slice instance #1.

For example, in this embodiment of this application, the request message #1 may have a specified format. To be specific, after receiving the request message #1, the device #2 determines, based on the specified format, that the network slice instance indicated by the identifier carried in the message needs to be updated.

For another example, in this embodiment of this application, the request message #1 may be added to a specified resource (for example, a time domain resource, a frequency domain resource, a code domain resource, or a space domain resource). To be specific, after receiving the message sent by using the specified resource, the device #2 determines, based on the specified resource, that the network slice instance indicated by the identifier carried in the message needs to be updated.

For another example, in this embodiment of this application, the request message #1 may carry an identifier #3 (that is, an example of a third parameter) with a specified value. To be specific, after receiving the message carrying the specified identifier #3, the device #2 determines, based on the specified identifier #3, that the network slice instance indicated by the identifier carried in the message needs to be updated.

Therefore, after receiving the request message #1, the device #2 can determine the network slice instance #1 based on the identifier #2, and further determine that the network slice instance #1 needs to be updated.

Optionally, the request message #1 may further carry information #4 (that is, another example of the third parameter), and the information #4 may be used to indicate that the network slice instance is updated based on the network slice template.

Specifically, in this embodiment of this application, the network slice instance may be updated based on the network slice template, or the network slice instance may be updated based on information about a user requirement, status information of a processing device, or the like.

Therefore, after determining that the request message #1 carries the information #4, the device #2 may determine, based on the information #4, that the network slice template needs to be used when the network slice instance is updated.

Further, the device #2 may determine, based on the mapping relationship #1, the network slice template corresponding to the identifier #1, in other words, the network slice template #1.

Therefore, the device #2 can determine the network slice template #1 based on the request message #1, and determine that the network slice template #1 is used to update the network slice template #1.

Optionally, the request message #1 may further carry information #5 (that is, an example of automatic synchronization indication information), and the information #5 may be used to indicate whether the network slice instance is updated by the device #2 autonomously.

Specifically, in this embodiment of this application, updating (specifically, an update moment) of the network slice instance by the device #2 may be autonomously determined by the device #2.

Alternatively, in this embodiment of this application, updating (specifically, an update moment) performed by the device #2 on the network slice instance may be indicated by the device #1.

In addition, by way of example, and not limitation, that the update moment of the network slice instance by the device #2 is indicated by the device #1 includes the following cases.

For example, the update moment may be indicated by the device #1 by using a message (denoted as a message #2) other than the request message #1. For example, the update moment may be within a specified time range starting from a time at which the device #2 receives the message #2. Alternatively, the message #2 may carry information used to indicate the update moment.

For another example, the update moment may be indicated by the device #1 by using the request message #1. For example, the update moment may be within a specified time range starting from a time at which the device #2 receives the request message #1. Alternatively, the request message #1 may carry information used to indicate the update moment.

Therefore, the device #2 may determine, based on the information #5 carried in the request message #1, whether the device #2 can autonomously determine the moment for updating the network slice instance #1.

In S340, after receiving the request message #1, the device #2 can determine the network slice instance #1 based on the identifier #2, and further determine that the network slice instance #1 needs to be updated. In addition, the device #2 may determine, based on the mapping relationship #1, the network slice template #1 corresponding to the identifier #1. Therefore, the device #2 may update the network slice instance #1 based on the network slice template #1.

A method and a process of updating the network slice instance by the device #2 based on the network slice template may be similar to those in the prior art. To avoid repetition, detailed descriptions thereof are omitted herein.

In S350, the device #2 may further send a response message #1 to the device #1, where the response message #1 may be used to indicate that the device #2 performs update processing on the network slice instance #1.

The response message #1 may carry the identifier #2.

For example, in this embodiment of this application, the response message #1 may have a specified format. To be specific, after receiving the response message #1, the device #1 determines, based on the specified format, that the network slice instance indicated by the identifier carried in the message is updated.

For another example, in this embodiment of this application, the response message #1 may be added to a specified resource (for example, a time domain resource, a frequency domain resource, a code domain resource, or a space domain resource). To be specific, after receiving the message sent by using the specified resource, the device #1 determines, based on the specified resource, that the network slice instance indicated by the identifier carried in the message is updated.

For another example, in this embodiment of this application, the response message #1 may carry an identifier #6 with a specified value. To be specific, after receiving the message carrying the specified identifier #6, the device #1 determines, based on the specified identifier #1, that the network slice instance indicated by the identifier (that is, the identifier #2) carried in the message is updated.

Therefore, after receiving the response message #1, the device #1 can determine, based on the identifier #2, that the network slice instance #1 is updated.

Optionally, in this embodiment of this application, the response message #1 may further carry an identifier #7 (which may also be referred to as an identifier of a lifecycle action event of the network slice subnet), and the identifier #7 may be used to indicate whether updating is successful.

Optionally, the identifier #7 may be used to indicate a time at which updating occurs.

According to the communication method in this application, a plurality of templates are preconfigured on the first device and the second device, and an identifier is configured for each template. The first device and the second device configure a same identifier for a same template. Therefore, when the first device determines that a network slice instance needs to be updated based on a template, the first device may add an identifier of the template and an identifier of the network slice instance to the request message, so that the second device can determine, based on the identifiers carried in the request message, the template used when the network slice instance is updated, and specific data of the template does not need to be sent to the second device when updating is indicated. This can reduce transmission resource overheads caused by updating the network slice instance, and reduce a processing latency of updating the network slice instance, thereby improving user experience.

FIG. 4 is a schematic block diagram of an example of a communications apparatus 400 according to an embodiment of this application. The apparatus 400 may correspond to (for example, be configured on or is) the first device (that is, the CSMF or the NSMF, for example, the device #A or the device #1) described in the foregoing method 200 or 300. Modules or units in the apparatus 400 are separately configured to execute the functions of the first device and the actions or the processing processes executed by the first device (for example, the device #A or the device #1) in the foregoing method 200 or 300. To avoid repetition, detailed descriptions thereof are omitted herein.

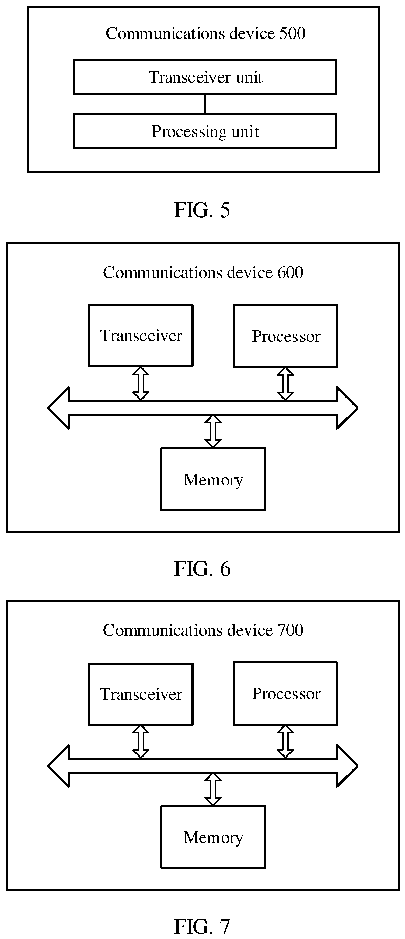

FIG. 5 is a schematic block diagram of an example of a communications apparatus 500 according to an embodiment of this application. The apparatus 500 may correspond to (for example, be configured on or is) the second device (that is, the NSSMF, for example, the device #B or the device #2) described in the foregoing method 200 or 300. Modules or units in the apparatus 500 are separately configured to execute the functions of the second device and the actions or the processing processes executed by the second device (for example, the device #B or the device #2) in the foregoing method 200 or 300. To avoid repetition, detailed descriptions thereof are omitted herein.

FIG. 6 is a schematic block diagram of an example of a communications device 600 according to an embodiment of this application. The device 800 includes a processor and a transceiver. The processor is in communication connection with the transceiver. Optionally, the device 600 further includes a memory. The memory is in communication connection with the processor. The memory may be configured to store an instruction. The processor is configured to execute the instruction stored in the memory, to control the transceiver to send or receive information or a signal.

For example, the processor is configured to execute the instruction stored in the memory, so that the device 600 executes the functions of the first device and the actions or the processing processes executed by the first device (for example, the device #A or the device #1) in the foregoing method 200 or 300. In this case, the device 600 may correspond to (for example, be configured on or is) the first device described in the foregoing method 200 or 300. The modules or the units in the device 600 are separately configured to execute the functions of the first device and the actions or the processing processes executed by the first device in the foregoing method 200 or 300. To avoid repetition, detailed descriptions thereof are omitted herein.

FIG. 7 is a schematic block diagram of an example of a device 700 for managing a network slice subnet instance according to an embodiment of this application. The device 700 includes a processor and a transceiver. The processor is in communication connection with the transceiver. Optionally, the device 700 further includes a memory. The memory is in communication connection with the processor. The memory may be configured to store an instruction. The processor is configured to execute the instruction stored in the memory, to control the transceiver to send or receive information or a signal.

For example, the processor is configured to execute the instruction stored in the memory, so that the device 700 executes the functions of the second device and the actions or the processing processes executed by the second device (for example, the device #B or the device #2) in the foregoing method 200 or 300. In this case, the device 700 may correspond to (for example, be configured on or is) the second device described in the foregoing method 200 or 300. The modules or the units in the device 700 are separately configured to execute the functions of the second device and the actions or the processing processes executed by the second device in the foregoing method 200 or 300. To avoid repetition, detailed descriptions thereof are omitted herein.

It should be noted that the embodiment of this application may be applied to a processor, or implemented by a processor. The processor may be an integrated circuit chip and has a signal processing capability. In an implementation process, steps in the foregoing method embodiments can be implemented by using a hardware integrated logical circuit in the processor, or by using instructions in a form of software. The processor may be a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, or a discrete hardware component. It may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in the embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification includes but is not limited to these and any memory of another proper type.

It should be understood that sequence numbers of the foregoing processes do not mean execution sequences in the embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the embodiments of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the embodiments of this application, but are not intended to limit the protection scope of the embodiments of this application. Any variation or replacement readily figured out by a person skilled in the art within the technical scope disclosed in this application shall fall within the protection scope of the embodiments of this application.

## Claims

1. A communication method, comprising:
sending, by a first device, a request message to a second device, wherein the request message is used to request to associate at least one first network slice subnet template with at least one first network slice subnet instance, and the request message comprises an identifier of the at least one first network slice subnet instance and an identifier of the at least one first network slice subnet template.

2. The communication method according to claim 1, further comprising:
receiving, by the first device, a response message from the second device, wherein the response message comprises a first parameter, and the first parameter is used to provide an identifier of a lifecycle action event of the at least one first network slice subnet instance.

3. A communication method, comprising:
receiving, by a second device, a request message from a first device, wherein the request message is used to request to associate at least one first network slice subnet template with at least one first network slice subnet instance, and the request message comprises an identifier of the at least one first network slice subnet instance and an identifier of the at least one first network slice subnet template.

4. The communication method according to claim 3, further comprising:
sending, by the second device, a response message to the first device, wherein the response message comprises a first parameter, and the first parameter is used to provide an identifier of a lifecycle action event of the at least one first network slice subnet instance.

5. The communication method according to claim 2 or 4, wherein the response message further comprises a second parameter, and the second parameter is used to indicate whether the at least one first network slice subnet template is successfully associated with the at least one first network slice subnet instance.

6. The communication method according to any one of claims 1 to 5, wherein the first request message further comprises a third parameter, and the third parameter is used to indicate that an action for the at least one first network slice subnet instance is to associate the at least one first network slice subnet template with the at least one first network slice subnet instance.

7. The communication method according to any one of claims 1 to 6, wherein the request message further comprises a fourth parameter, and the fourth parameter is used to indicate whether the at least one first network slice subnet instance is automatically synchronized by the second device to the at least one network slice subnet template.

8. A communication method, comprising:
sending, by a first device, a request message to a second device, wherein the request message is used to request to associate at least one first network slice template with at least one first network slice instance, and the request message comprises an identifier of the at least one first network slice instance and an identifier of the at least one first network slice template.

9. The communication method according to claim 8, further comprising:
receiving, by the first device, a response message from the second device, wherein the response message comprises a first parameter, and the first parameter is used to provide an identifier of a lifecycle action event of the at least one first network slice instance.

10. A communication method, comprising:
receiving, by a second device, a request message from a first device, wherein the request message is used to request to associate at least one first network slice template with at least one first network slice instance, and the request message comprises an identifier of the at least one first network slice instance and an identifier of the at least one first network slice template.

11. The communication method according to claim 10, further comprising:
sending, by the second device, a response message to the first device, wherein the response message comprises a first parameter, and the first parameter is used to provide an identifier of a lifecycle action event of the at least one first network slice instance.

12. The communication method according to claim 9 or 11, wherein the response message further comprises a second parameter, and the second parameter is used to indicate whether the at least one first network slice template is successfully associated with the at least one first network slice instance.

13. The communication method according to any one of claims 8 to 12, wherein the first request message further comprises a third parameter, and the third parameter is used to indicate that an action for the at least one first network slice instance is to associate the at least one first network slice template with the at least one first network slice instance.

14. The communication method according to any one of claims 8 to 13, wherein the request message further comprises a fourth parameter, and the fourth parameter is used to indicate whether the at least one first network slice instance is automatically synchronized by the second device to the at least one network slice template.

15. A communications apparatus, comprising:
a processor, configured to execute a computer program stored in a memory, to control a transceiver to send a request message to a second device, wherein the request message is used to request to associate at least one first network slice subnet template with at least one first network slice subnet instance, and the request message comprises an identifier of the at least one first network slice subnet instance and an identifier of the at least one first network slice subnet template.

16. The communications apparatus according to claim 15, wherein the processor is further configured to control the transceiver to receive a response message from the second device, wherein the response message comprises a first parameter, and the first parameter is used to provide an identifier of a lifecycle action event of the at least one first network slice subnet instance.

17. A communications apparatus, comprising:
a processor, configured to execute a computer program stored in a memory, to control a transceiver to receive a request message from a first device, wherein the request message is used to request to associate at least one first network slice subnet template with at least one first network slice subnet instance, and the request message comprises an identifier of the at least one first network slice subnet instance and an identifier of the at least one first network slice subnet template.

18. The communications apparatus according to claim 17, wherein the processor is further configured to control the transceiver to send a response message to the first device, wherein the response message comprises a first parameter, and the first parameter is used to provide an identifier of a lifecycle action event of the at least one first network slice subnet instance.

19. The communications apparatus according to claim 16 or 18, wherein the response message further comprises a second parameter, and the second parameter is used to indicate whether the at least one first network slice subnet template is successfully associated with the at least one first network slice subnet instance.

20. The communications apparatus according to any one of claims 15 to 19, wherein the first request message further comprises a third parameter, and the third parameter is used to indicate that an action for the at least one first network slice subnet instance is to associate the at least one first network slice subnet template with the at least one first network slice subnet instance.

21. The communications apparatus according to any one of claims 15 to 20, wherein the request message further comprises a fourth parameter, and the fourth parameter is used to indicate whether the at least one first network slice subnet instance is automatically synchronized by the second device to the at least one network slice subnet template.

22. A communications apparatus, comprising:
a processor, configured to execute a computer program stored in a memory, to control a transceiver to send a request message to a second device, wherein the request message is used to request to associate at least one first network slice template with at least one first network slice instance, and the request message comprises an identifier of the at least one first network slice instance and an identifier of the at least one first network slice template.

23. The communications apparatus according to claim 22, wherein the processor is further configured to control the transceiver to receive a response message from the second device, wherein the response message comprises a first parameter, and the first parameter is used to provide an identifier of a lifecycle action event of the at least one first network slice instance.

24. A communications apparatus, comprising:
a processor, configured to execute a computer program stored in a memory, to control a transceiver to receive a request message from a first device, wherein the request message is used to request to associate at least one first network slice template with at least one first network slice instance, and the request message comprises an identifier of the at least one first network slice instance and an identifier of the at least one first network slice template.

25. The communications apparatus according to claim 24, wherein the processor is further configured to control the transceiver to send a response message to the first device, wherein the response message comprises a first parameter, and the first parameter is used to provide an identifier of a lifecycle action event of the at least one first network slice instance.

26. The communications apparatus according to claim 23 or 25, wherein the response message further comprises a second parameter, and the second parameter is used to indicate whether the at least one first network slice template is successfully associated with the at least one first network slice instance.

27. The communications apparatus according to any one of claims 22 to 26, wherein the first request message further comprises a third parameter, and the third parameter is used to indicate that an action for the at least one first network slice instance is to associate the at least one first network slice template with the at least one first network slice instance.

28. The communications apparatus according to any one of claims 22 to 27, wherein the request message further comprises a fourth parameter, and the fourth parameter is used to indicate whether the at least one first network slice instance is automatically synchronized by the second device to the at least one network slice template.

29. A computer-readable storage medium, comprising a computer program, wherein when the computer program runs on a computer, the computer is enabled to perform the communication method according to any one of claims 1 to 14.

30. A chip system, comprising:
a processor, configured to invoke a computer program from a memory and run the computer program, so that a device on which the chip system is installed performs the communication method according to any one of claims 1 to 14.
